# EUROPEAN PATENT APPLICATION

(11) **EP 1 103 171 A1**
(43) Date of publication of application: **30.05.2001**
(21) Application number: 00310427.0
(22) Date of filing: 24.11.2000
(51) Int. Cl.: A01B 59/06

(54) **Tractor coupling**

(30) Priority: 27.11.1999 GB 9927988
(71) Applicant: McVeigh, David Creighton, Kenton, Stowmarket IP14 6JU (GB)
(72) Inventor: McVeigh, David Creighton, Kenton, Stowmarket IP14 6JU (GB)
(74) Representative: Copp, David Christopher

(57) **Abstract**

A coupling for coupling together a tractor and an agricultural implement to be towed/lifted by the tractor has two mating parts 14, 16 one of which 14 is mounted on the tractor and the other of which 16 is mounted on the implement. The two parts fit one inside the other and fixed pins 30 then locate the two parts together. After the parts have been fitted together, movable pins 32 are positioned to lock the two parts so that a secure coupling between the tractor and the implement is formed. The parts can be fitted together by driving the tractor with the part 14 up to the implement with the part 16 whereupon one part engages within the other.

## Description

This invention relates to a tractor coupling, by means of which a variety of agricultural implements can be coupled to and decoupled from a tractor.

Agricultural tractors are conventionally provided with a three-point linkage at the rear for coupling of an implement to be drawn by the tractor. The use of a three point linkage allows a rigid, stable and yet adjustable connection to be made between the tractor and the implement. Many different implements are coupled to tractors in this way. Some examples are ploughs and harrows, but many other implements can also be towed or lifted by a tractor. Some require a connection to the tractor power take-off shaft and others do not. Some require connection to the tractor's hydraulic system and others do not.

Actually making the connection between an implement and a three point linkage is however time consuming and requires the tractor driver to manoeuvre the tractor so that the tractor is in position relative to the linkage, and then dismounting from the tractor to connect up each of the three links to the respective connection points on the implement, before driving away.

According to the invention, there is provided a tractor/implement coupling comprising two parts, a first part to be mounted on a tractor, and a second part to be mounted on an implement, the first and second parts being adapted to mate with one another when brought into proximity with one another, and the coupling also including a movable member which can move between the two parts to lock them together in the mated position.

The use of such a coupling enables the tractor and implement to be coupled together merely by driving the tractor towards the implement so that the first and second parts engage with one another, and operating the tractor's linkage controls to complete a coupling operation. This can be done without the driver leaving the tractor cab.

The first part can be mounted at either the front or the back of a tractor. In a preferred embodiment it will be mounted at the back, and may be connected at three points to a conventional three-point linkage.

The first and second parts preferably have a male-female relationship, so that one part fits inside the other when the two parts are mated together. The female part will preferably be fitted on the implement and the male part on the tractor.

The movable member may be hydraulically operable, and thus can be remotely operated, from the tractor cab. The movable member is preferably provided on the part to be fitted on the tractor.

The male and female parts can both be of an inverted U-shape and are preferably arranged to be mounted in a substantially vertical plane on, respectively, a tractor and an implement. The movable member can have two pins which can be moved to lock together the downwardly extending limbs of the U-shaped parts. The two pins can be moved by a single hydraulic actuator through a system of levers, and the hydraulic actuator can be fed with hydraulic pressure through a loop line which can be connected into, or isolated from, a main hydraulic system by the operation of valves in the loop line.

The lower ends of the downwardly extending limbs of the U-shaped parts are preferably parallel to one another. Then, when the second part has one upper and two lower brackets for attachment to an implement at three points, the two lower brackets can be positioned at various vertical positions on the second part without altering their horizontal spacing.

The upper portion of the male member can have a pin or pins and the upper portion of the female member can have a corresponding hole or holes to receive the pin or pins, to locate the two parts together.

The invention extends to an agricultural implement having mounted thereon a coupling second part as set forth above, to a first part for a tractor/implement coupling as set forth above and to a second part for a tractor/implement coupling as set forth above.

The invention will now be further described, by way of example, with reference to the accompanying drawings, in which:
Figure 1 is a side view of a tractor and an (uncoupled) implement, with a coupling in accordance with the invention;
Figure 2 is a schematic drawing of two main parts of the coupling illustrating how they fit together;
Figure 3 shows the two parts of Figure 2 coupled together;
Figure 4 shows one of the coupling parts with associated hydraulic connections;
Figure 5 is a side view of one of the two components of a coupling in accordance with the invention; and
Figure 6 is a side view of the other of the two components of the coupling in accordance with the invention.

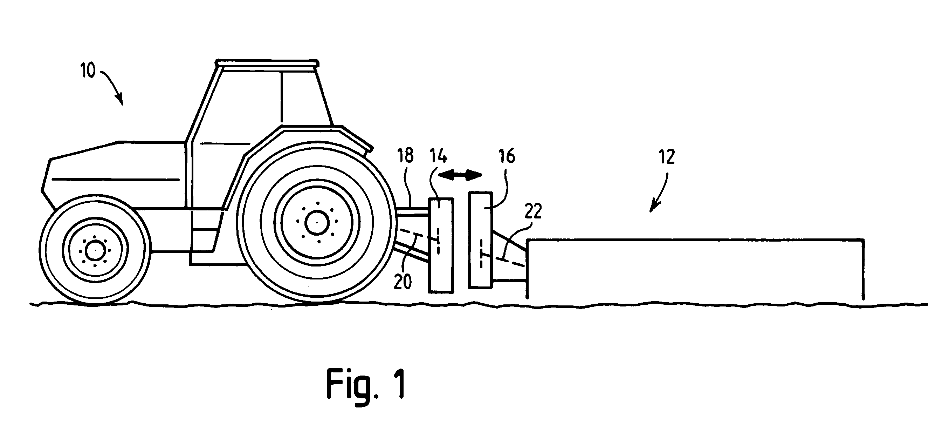

Figure 1 shows a tractor 10 and an implement 12 which is to be towed by the tractor. The implement is shown schematically, as the particular function and form of the implement is immaterial to the invention, save that it be an implement which is to be towed/lifted by a tractor. The tractor and implement are to be coupled together by a two-part coupling which comprises a first part 14 fixed to the tractor 10 and a second part 16 fixed to the implement 12. In Figure 1, the two parts are shown separated. When the parts are coupled, one is received within the other, and they are locked together, in a manner to be described below.

The first part 14 is mounted on the three-point linkages 18 of the tractor. A power take off shaft 20 extends through the coupling and is to be connected with a drive shaft 22 on the implement 12.

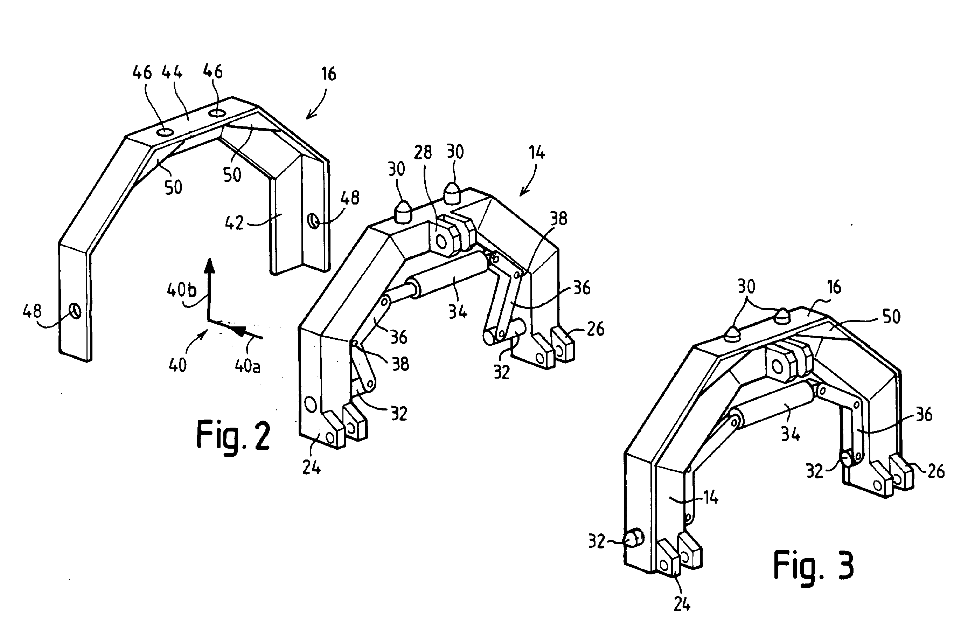

The first (tractor) part 14 shown on the right in Figure 2 is built of generally square section tube in a generally inverted U-shape. Attachment points 24, 26 and 28 are provided for attachment to the ends of the tractor three-point linkage, using conventional fixings. The part 14 has two fixed, upwardly projecting pins 30 and two lateral pins 32 movable by a hydraulically operated linkage. The linkage consists of a cylinder 34 connected between two bell-crank levers 36 pivoted at their middle portions 38 to bearings fixed on the part 14. Extending the cylinder 34 causes the pins 32 to be retracted into the position shown in Figure 2. Retracting the cylinder causes the pins to be extended into the position shown in Figure 3.

The pins 32 can however alternatively be manually extended, and this may be necessary on a tractor without hydraulics, for example small garden tractors, or when the first part is mounted at the front of a tractor.

The second (implement) part 16 has an inverted U-shape corresponding to the shape of the first part. However the second part is built of angle section stock, and is of a size such that the first part can fit within the second part. The two parts will be fitted together by movements in the directions indicated by an arrow 40; that is the parts will first approach one another (arrow 40a) with the first part lower than the second part, until the front face (the face not visible in Figure 2) comes into contact with the inner face 42 of the second part 16. Then the first part will be lifted (arrow 40b) up until the top of the first part comes into contact with the inside of the top 44 of the second part. In this position, the pins 30 will engage in holes 46 in the top 44 of the second part.

To lock the two parts together, the hydraulic cylinder 34 will then be actuated to extend the pins 32 which will then extend through corresponding holes 48 in the second part.

The second part 16 also has webs 50 across upper parts of the U-shape to assist in guiding the first part into the second part and to assist both in retaining the connection and in transferring load between the two parts.

Figure 3 shows the two parts engaged with one another.

It is expected that, on a farm, each implement will be permanently fitted with a second part 16, and tractors will be permanently fitted with a male part 14. There will normally be more implements than tractors, and therefore there will be more second parts than first parts. Accordingly, the second parts should be relatively simple and cheap constructions, with any expensive or more complex components being provided on the first part.

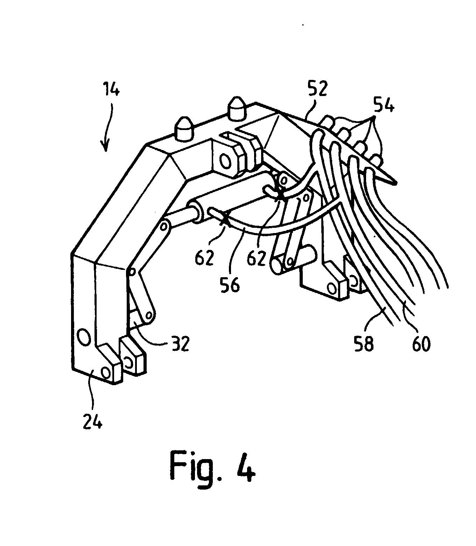

The hydraulic cylinder 34 will be fed from the tractor hydraulic circuit. Typically a tractor has a number of hydraulic lines which can be connected to external devices, possibly on the implement, to operate those devices. Those lines can be mounted on a mounting plate 52 (Figure 4) on the first part, and the consumer units from the implement can be connected to the lines via terminals 54 on the plate 52. The two sides of the hydraulic cylinder 34 can be fed from two of those lines, via a loop 56 which has one line connecting one side of the cylinder to a line 58 and another line connecting the other side to a line 60. Shut-off valves 62 are provided in both lines of the loop 56. To operate the cylinder 34, both valves 62 will be opened and the tractor hydraulic system will be used to either extend or retract the cylinder. Once the cylinder has been operated, both valves 62 can be closed and pressure will maintained in the cylinder to maintain the cylinder position (either retracted or extended). the hydraulic lines 58 and 60 can then still be used for other purposes as they are now isolated from the cylinder 34.

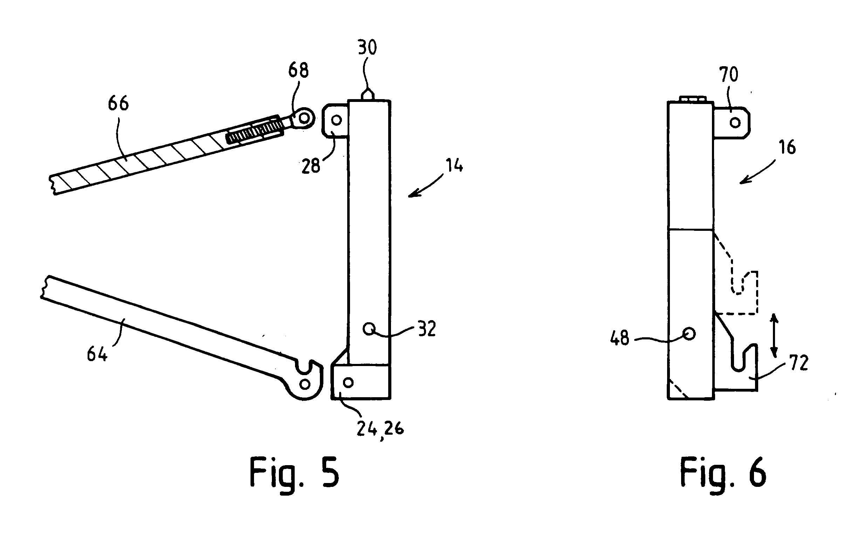

Figure 5 shows how the coupling part 14 will be fitted to a tractor three-point linkage. The two lower arms 64 can either hook under a cross-pin in the bracket 24, or can have a pin passed through a hole in the arm and the hole in the bracket. The top link 66 has a threaded shaft 68 connected to the bracket 28, to allow some vertical adjustment. Normally this link will be set so that the coupling part 14 is vertical when the tractor is normally loaded.

The coupling part 16 can be mounted to the implement in any convenient way, and could even be permanently welded to the implement. However when a detachable part is used, this can have a three point connection to the implement in a manner similar to the tractor connection of the part 14. A top bracket 70 receives a top link. Lower brackets 72 can be bolted or welded to the main structure of the part 16 at a height to suit the construction of the implement. An alternative bracket position is shown in dotted lines. Because the lower limbs of the part 16 are vertical, different lower link heights for different implements can be easily accommodated by setting the lower bracket position for each implement or even moving the brackets if the part 16 is moved from one implement to another.

A 'quick-fit' connection of the coupling part 16 to the implement can be achieved using lower brackets into which implement links drop in and a single pin at the top in the bracket 70.

The coupling will normally be fabricated from welded steel. The holes 46 and 48 for the pins 30 and 32 can be reinforced.

The coupling enables a tractor to connect up to an implement by simply driving the tractor towards the implement, using the tractor's conventional controls to lower the tractor part 14 of the coupling to below the implement part 16 of the coupling, driving the tractor so that the coupling part 14 engages inside the coupling part 16, using the tractor's controls to lift the coupling part 14 up to engage the pins 30 in the holes 46, and then operating the tractor's hydraulic controls to retract the cylinder 34 and to extend the pins 32 into the holes 48. The implement is then securely coupled to the tractor, and work with the implement can begin. All this can be done by the tractor driver without dismounting from the cab.

If it is necessary to couple up a power take-off shaft, and/or to shut the valves 62 to allow the hydraulic lines to be used for another system, then this can be done manually after coupling up. However it would not be difficult to arrange for remote shutting off of the valves 62, if desired, using known electrical systems.

To assist in engaging the two coupling parts when the tractor is reversed to approach the implement, one or both of the coupling parts may have a taper in the approach direction so that the tractor driver has a tolerance in the positioning of the approach direction.

If all the implements on a farm are fitted with coupling parts 16, the ease of picking up and moving each implement can lead to space-saving storage of implements. Rather than arranging the implements so that any of them can be picked up at any time, it is now possible for a tractor operator to pick up and move aside one or more implements to get at the one he wants, without leaving the tractor cab. As a result, a number of implements can be stored in a relatively small space.

It will be appreciated that the first part and the second part may be sold separately, especially as there will be many second parts for each first part. The invention therefore extends to first parts sold on their own and to second parts sold on their own.

## Claims

1. A tractor/implement coupling comprising two parts, a first part to be mounted on a tractor, and a second part to be mounted on an implement, the first and second parts being adapted to mate with one another when brought into proximity with one another, and the coupling also including a movable member which can move between the two parts to lock them together in the mated position.

2. A coupling as claimed in Claim 1, wherein the first and second parts have a male-female relationship, so that one part fits inside the other when the two parts are mated together.

3. A coupling as claimed in Claim 1 or Claim 2, wherein the first part is adapted to be mounted to the rear of a tractor, at three points on a tractor three-point linkage.

4. A coupling as claimed in Claim 2 or Claim 3, wherein the female part is to be fitted on the implement and the male part is to be fitted on the tractor.

5. A coupling as claimed in any preceding claim, wherein the movable member is hydraulically operable.

6. A coupling as claimed in any preceding claim, wherein the male and female parts are both of an inverted U-shape and are arranged to be mounted in a substantially vertical plane on, respectively, a tractor and an implement and wherein the movable member has two pins which can be moved to lock together the downwardly extending limbs of the U-shaped parts.

7. A coupling as claimed in Claim 6, wherein the two pins are moved by a single hydraulic actuator through a system of levers.

8. A coupling as claimed in Claim 7, wherein the hydraulic actuator is fed with hydraulic pressure through a loop line which can be connected into, or isolated from, a main hydraulic system by the operation of valves in the loop line.

9. A coupling as claimed in any one of Claims 6 to 8, wherein the lower ends of the downwardly extending limbs of the U-shaped parts are parallel to one another.

10. A coupling as claimed in any preceding claim, wherein the movable member is provided on the part to be fitted on the tractor.

11. A coupling as claimed in any one of Claims 6 to 10, wherein the upper portion of the male member has a pin or pins and the upper portion of the female member has a hole or holes to receive the pin or pins, to locate the two parts together.

12. A coupling as claimed in any preceding claim, wherein the second part has one upper and two lower brackets for attachment to an implement at three points, and the two lower brackets can be positioned at various vertical positions on the second part.

13. A tractor/implement coupling substantially as herein described with reference to the accompanying drawings.

14. An agricultural implement having mounted thereon a coupling second part as claimed in any preceding claim.

15. A first part for a tractor/implement coupling as claimed in any one of Claims 1 to 11.

16. A second part for a tractor/implement coupling as claimed in any one of Claims 1 to 11.
